# DEMANDE DE BREVET EUROPEEN

(11) **EP 1 510 124 A1**
(43) Date de publication de la demande: **02.03.2005**
(21) Numéro de dépôt: 04292002.5
(22) Date de dépôt: 06.08.2004
(51) Int. Cl.: A01K 39/02, A01K 7/06

(54) **Dispositif d'abreuvement automatique d'animaux**

(30) Priorité: 13.08.2003 FR 0309966
(71) Demandeur: Jeanrot, René, 45160 Olivet (FR)
(72) Inventeur: Jeanrot, René, 45160 Olivet (FR)
(74) Mandataire: Debay, Yves

(57) **Abrégé**

Dispositif d'abreuvement automatique d'animaux comprenant une pipette d'abreuvement accessible à l'animal et une canalisation d'alimentation en eau, caractérisé en ce qu'une zone tampon est interposée entre la pipette et la canalisation, des moyens de la zone tampon assurant une discontinuité entre le volume contenu dans la zone tampon et le liquide contenu dans la canalisation.

## Description

La présente invention concerne un dispositif d'abreuvement automatique pour animaux et un kit de transformation de dispositif d'abreuvement. De tels dispositifs sont utilisés dans les élevages d'animaux et les animaleries, et notamment les animaleries de laboratoires, où le nombre important d'animaux rend l'abreuvement automatique indispensable.

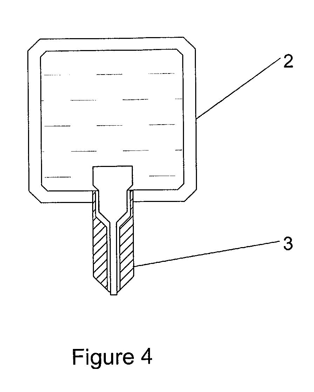

Il est connu dans l'art antérieur représenté figure 4 des dispositifs d'abreuvement automatique comportant une canalisation d'alimentation commune sur laquelle sont raccordées plusieurs pipettes d'abreuvement, une pour chaque animal ou groupe d'animaux. Ces pipettes sont munies d'un contrepoids interne, ou tout autre système (flotteur, joint et ressort, etc...) qui sert à obturer automatiquement la pipette lorsque celle-ci n'est pas sollicitée par un animal. La canalisation est alimentée en permanence, et permet de réaliser un réseau d'alimentation pour un nombre d'animaux importants. Ce type d'installation présente toutefois deux inconvénients majeurs. Le premier inconvénient est la transmission des contaminations microbiennes d'un animal malade aux autres animaux suite à ses régurgitations dans le réseau d'alimentation. En effet, les régurgitations des animaux font de l'eau circulant dans la canalisation d'alimentation un milieu hyper contaminé qui favorise la transmission de maladies et l'apparition d'épidémies. Le deuxième inconvénient d'un tel système est le risque important que courent les animaux en cas de fuite du système, par exemple lorsqu'une pipette se bloque et reste ouverte, cela aboutit à l'inondation des aires d'élevages et en particulier des bacs, et à la noyade des petits animaux (rongeurs...)

La présente invention a pour objet de pallier les inconvénients de l'art antérieur en proposant un dispositif d'abreuvement automatique supprimant les effets contaminant de la régurgitation de l'animal, protégeant chaque animal de la contamination potentielle de ses congénères, et enfin limitant les problèmes conséquents aux fuites éventuelles du dispositif.

Cet objectif est atteint par un dispositif d'abreuvement automatique d'animaux comprenant une pipette d'abreuvement accessible à l'animal et une canalisation d'alimentation en eau, caractérisé en ce qu'une zone tampon est interposée entre la pipette et la canalisation, des moyens de la zone tampon assurant, par un volume d'air en communication avec l'extérieur du dispositif, une discontinuité entre le volume de liquide contenu dans la zone tampon et le liquide contenu dans la canalisation.

Selon une autre particularité, la zone tampon est pourvue d'un orifice à chacune de ses extrémités, l'orifice inférieur étant muni d'un moyen de fixation et de raccordement de la pipette d'abreuvement, l'orifice supérieur alimentant la zone tampon étant pourvu d'un moyen de fixation et de raccordement à la canalisation.

Selon une autre particularité, un moyen de réglage du débit est interposé entre la canalisation et la zone tampon, le moyen de réglage du débit étant adapté à la quantité maximale à délivrer et réglé pour délivrer la quantité d'eau nécessaire à l'animal, la zone tampon pouvant contenir un volume supérieur à cette quantité.

Selon une autre particularité, la zone tampon comporte un moyen de maintenir le niveau de liquide de la zone tampon en dessous d'un seuil, quel que soit le débit réglé.

Selon une autre particularité, le moyen de maintenir le niveau de liquide de la zone tampon en dessous d'un seuil est un ajutage latéral pratiqué sur l'enveloppe de la zone tampon et situé à une distance de l'orifice inférieur déterminée en fonction du volume utile souhaité pour la zone tampon.

Selon une autre particularité, le dispositif est caractérisé en ce que le moyen de réglage du débit entrant dans la zone tampon est réalisé par un pointeau vissé dans un trou taraudé percé sur la surface extérieure de la zone tampon et débouchant dans le conduit prolongeant l'orifice d'entrée de la zone tampon pour permettre au pointeau d'obturer de façon totale ou partielle ce conduit, le pointeau étant pourvu d'un joint d'étanchéité.

Selon une autre particularité, le dispositif est caractérisé en ce que le moyen de raccordement et de fixation de la zone tampon à la canalisation est un tube fileté sur sa surface extérieure destiné à coopérer avec un trou taraudé correspondant présent sur la canalisation d'alimentation.

Selon une autre particularité, le dispositif est caractérisé en ce que le tube de fixation de la zone tampon à la canalisation d'alimentation est d'axe oblique par rapport à l'axe longitudinal de la zone tampon, formant ainsi un angle compris entre 0° et 90° avec l'axe longitudinal de la zone tampon.

Selon une autre particularité, le dispositif est caractérisé en ce que le tube de fixation de la zone tampon à la canalisation d'alimentation est disposé verticalement, la zone tampon étant alors fixée sous la canalisation d'alimentation.

Selon une autre particularité, le dispositif est caractérisé en ce que le tube de fixation de la zone tampon à la canalisation est disposé horizontalement, la zone tampon étant fixée sur une paroi latérale de la canalisation d'alimentation.

Selon une autre particularité, le dispositif est caractérisé en ce que l'orifice inférieur est un alésage taraudé pour permettre la fixation de la pipette et l'alimentation de celle-ci en liquide.

Selon une autre particularité, le dispositif est caractérisé en ce que l'alésage taraudé est d'axe vertical.

Selon une autre particularité, le dispositif est caractérisé en ce que l'alésage taraudé est d'axe horizontal.

Selon une autre particularité, le dispositif est caractérisé en ce que l'alésage taraudé est d'axe oblique par rapport à l'axe longitudinal de la zone tampon, les deux axes formant un angle α compris entre 0° et 90°

Selon une autre particularité, le dispositif est caractérisé en ce que l'angle α a une valeur de 45 degrés.

Un autre but de l'invention est de proposer un kit de transformation pour supprimer les risques de contagion et ceux d'inondation.

Ce but est atteint par le kit constitué d'un réservoir pourvu à une extrémité d'un adaptateur destiné à se fixer dans la canalisation d'alimentation et à l'autre extrémité d'un orifice destiné à recevoir la pipette d'abreuvement, l'extrémité proche de l'orifice de fixation à la canalisation comportant un moyen de réglage fin du débit d'alimentation goutte à goutte du réservoir pour adapter le débit à la quantité journalière à distribuer, le volume du réservoir étant supérieur à la quantité à délivrer à l'animal en une prise ponctuelle, le réservoir étant pourvu d'un moyen de maintenir le niveau du liquide en dessous d'un certain seuil quel que soit le débit réglé.

L'invention, avec ses caractéristiques et avantages, ressortira plus clairement à la lecture de la description faite en référence aux dessins annexés dans lesquels :
- la figure 1 représente un mode de réalisation de l'invention,
- les figures 2 et 3 représente des variantes de réalisation du réservoir,
- la figure 4 représente un système d'abreuvement de type connu.

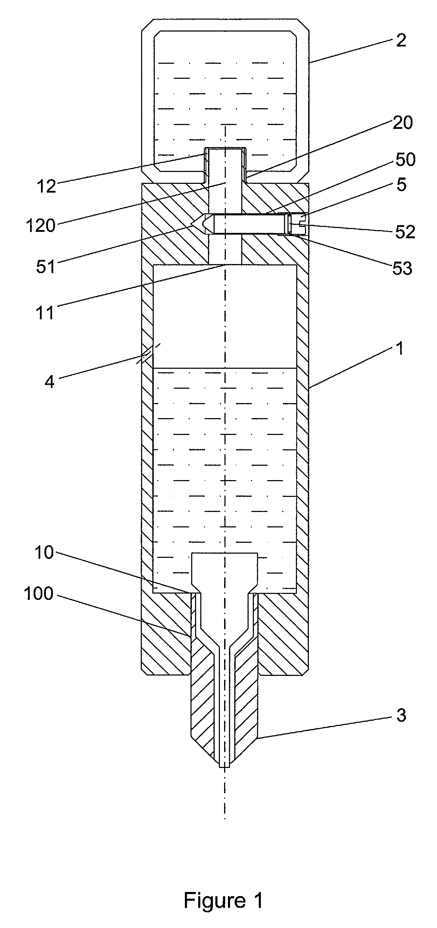

La figure 1 représente un système d'abreuvement automatique réalisé avec la zone tampon selon l'invention. La partie centrale de la zone tampon (1) est un corps cylindrique d'axe vertical formant un réservoir. La section du réservoir (1) pourra, par exemple, être carrée ou circulaire. Le réservoir (1) est raccordé à la canalisation (2) grâce à un tube fileté (12). Ce tube fileté (12) est vissé sur un trou taraudé (20) présent sur la canalisation (2). Le tube fileté (12) est prolongé d'un conduit (120) dont l'extrémité inférieure constitue l'orifice de remplissage (11) du réservoir (1). Au-dessus de cet orifice (11) est disposé un pointeau (5) qui comporte sur sa surface un filetage pour être vissé dans un trou taraudé (50) percé sur la surface extérieure du corps du réservoir et débouchant dans le conduit (120.) L'extrémité du pointeau est conique et un contre-cône (51) complémentaire est percé sur la surface interne du conduit (120), dans l'alignement du trou taraudé (50), pour permettre au pointeau (5) d'obturer intégralement le conduit (120) si nécessaire et également permettre un réglage fin du débit. Le pointeau pourra être pourvu d'un joint torique (53), monté dans une gorge (52) circulaire pratiquée sur le pointeau, pour en assurer l'étanchéité. L'orifice inférieur (10) du réservoir (1) est prolongé par un trou taraudé (100) destiné au raccordement et à la fixation d'une pipette d'abreuvement (3), qui est accessible à l'animal. Un ajutage latéral (4) permet de déterminer le volume de liquide admissible dans le réservoir (1), tout en assurant une discontinuité entre le liquide contenu dans le réservoir (1) et celui contenu dans la canalisation (2), évitant ainsi toute contamination en provenance du réservoir (1) vers la canalisation (2). La taille du réservoir (1) et son volume utile seront adaptés à chaque espèce animale en fonction de ses besoins journaliers. La contenance du réservoir (1) pourra par exemple être proche du dixième de la consommation journalière de l'animal concerné, ce qui représente un volume de 10 à 15 ml pour des rongeurs. Dans tous les cas, le volume de réserve sera au moins égal au double de l'absorption par l'animal en une prise. Le réservoir (1) est alimenté en permanence par la canalisation (2) au goutte à goutte. Le débit du goutte à goutte est réglé grâce au pointeau (5), et sera déterminé en fonction de la consommation journalière de l'animal. Ainsi le débit sera tel que le volume journalier allant dans le réservoir (1) sera au moins égal à la consommation journalière de l'animal. Le remplissage goutte à goutte permanent permet d'assurer une qualité constante de l'eau de boisson. Lorsque le réservoir (1) est plein, l'excédent d'eau est évacué grâce à l'ajutage latéral (4), ce qui permet le renouvellement d'eau propre à disposition des animaux. En cas de fuite accidentelle, par exemple lorsqu'une pipette se bloque, le réservoir (1) ne délivre que la quantité de liquide de la zone tampon, ce qui permet d'éviter l'inondation des cages et la noyade des petits animaux. En effet, une fois le réservoir vide, l'eau coule au goutte à goutte et il faut plusieurs dizaines de jours pour remplir une cage alors qu'avec un système connu, comme représenté sur la figure 4, le remplissage se fait en quelques minutes. Cette sécurité permet également de parer aux utilisations abusives des animaux en évitant une surconsommation d'eau.

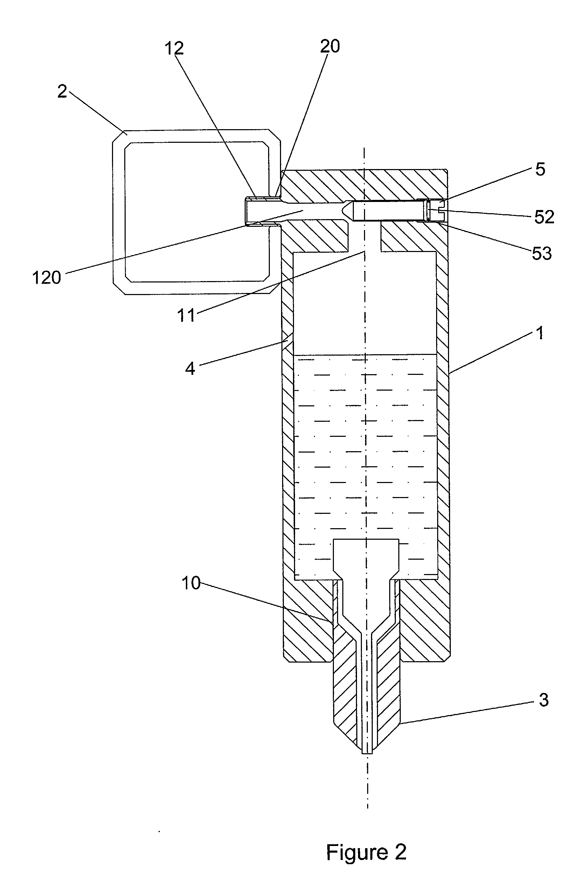

La figure 2 représente une variante de réalisation des moyens de fixation du réservoir (1) sur la canalisation d'alimentation (2) Dans cette variante, le tube fileté (12) servant au raccordement du réservoir (1) à la canalisation (2) d'alimentation est d'axe horizontal. Le tube fileté (12) est vissé sur un trou taraudé (120) également horizontal présent sur une face verticale de la canalisation (2) d'alimentation. Le conduit (120) est horizontal et son extrémité proche du pointeau (5) forme une ouverture de forme complémentaire avec l'extrémité conique du pointeau (5).

Dans une variante non représentée, le tube fileté (12) est d'axe oblique par rapport à l'axe longitudinal de la zone tampon. Ainsi l'axe du tube fileté (12) forme avec l'axe longitudinal de la zone tampon un angle compris entre 0° et 90°. Cette disposition permettra d'adapter le dispositif à une gamme de tuyaux plus étendue, plus particulièrement dans les cas où les orifices d'arrivée d'eau sur la canalisation sont de direction oblique. On pourra ainsi fixer le dispositif de manière que la zone tampon soit verticale pour assurer le bon fonctionnement du dispositif, quelle que soit la configuration d'origine de la canalisation d'alimentation.

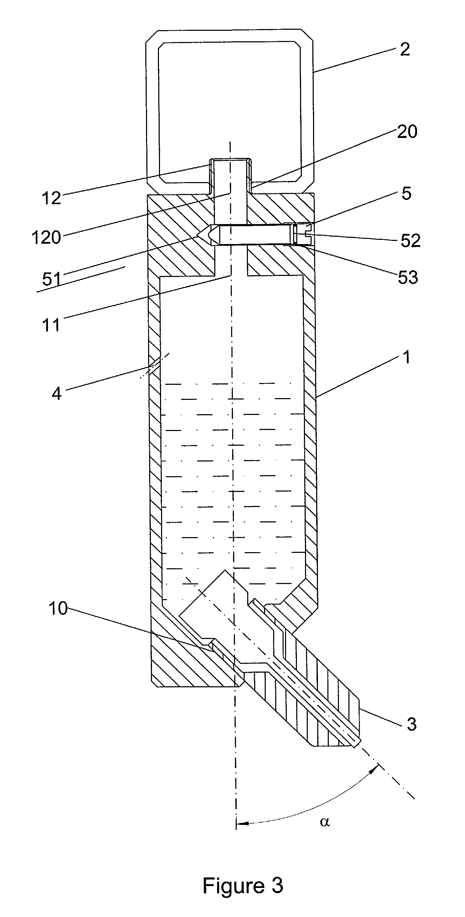

La figure 3 montre une variante de réalisation des moyens de fixation de la pipette (3) d'abreuvement sur le réservoir (1.) Dans cette variante, le trou taraudé (100) de fixation de la pipette (3) d'abreuvement est orienté à 45° par rapport à l'axe longitudinal du réservoir. Cette disposition permet d'avoir une orientation de la pipette (3) à 45° par rapport à la verticale ce qui permet dans certains cas de faciliter l'accès des animaux à la pipette.

Dans une variante, le trou taraudé (100) sera d'axe horizontal pour permettre une orientation horizontale de la pipette (3).

Le dispositif selon l'invention permet à l'animal de s'abreuver à sa convenance, l'eau absorbée à chaque prise étant en permanence renouvelée par de l'eau propre. Le volume très faible de la réserve évite les contaminations d'eau stagnante et le réseau d'alimentation est protégé des régurgitations des animaux, sources de contaminations.

L'invention peut être également mise en oeuvre par des kits d'adaptation pour installations d'abreuvement existantes. Le kit est constitué d'un réservoir pourvu à une extrémité d'un adaptateur destiné à se fixer dans la canalisation d'alimentation et à l'autre extrémité d'un orifice destiné à recevoir la pipette d'abreuvement, l'extrémité proche de l'orifice de fixation à la canalisation comportant un moyen de réglage fin du débit d'alimentation goutte à goutte du réservoir pour adapter le débit à la quantité journalière à distribuer, le volume du réservoir étant supérieur à la quantité à délivrer à l'animal en une prise ponctuelle.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif d'abreuvement automatique d'animaux comprenant une pipette d'abreuvement accessible à l'animal et une canalisation d'alimentation en eau, **caractérisé en ce qu'**une zone tampon est interposée entre la pipette (3) et la canalisation (2), des moyens de la zone tampon assurant, par un volume d'air en communication avec l'extérieur du dispositif, une discontinuité entre le volume de liquide contenu dans la zone tampon et le liquide contenu dans la canalisation.

2. Dispositif selon la revendication 1, **caractérisé en ce que** la zone tampon est pourvue d'un orifice à chacune de ses extrémités, l'orifice inférieur (10) étant muni d'un moyen de fixation et de raccordement de la pipette d'abreuvement, l'orifice supérieur (11) alimentant la zone tampon étant pourvu d'un moyen de fixation et de raccordement à la canalisation.

3. Dispositif selon la revendication 1 ou 2, **caractérisé en ce qu'**un moyen de réglage du débit (5) est interposé entre la canalisation (2) et la zone tampon, le moyen de réglage du débit étant adapté à la quantité maximale à délivrer et réglé pour délivrer la quantité d'eau nécessaire à l'animal, la zone tampon pouvant contenir un volume supérieur à cette quantité.

4. Dispositif selon l'une des revendications 1 à 3, **caractérisé en ce que** la zone tampon comporte un moyen de maintenir le niveau de liquide de la zone tampon en dessous d'un seuil, quel que soit le débit réglé.

5. Dispositif selon la revendication 4, **caractérisé en ce que** le moyen de maintenir le niveau de liquide de la zone tampon en dessous d'un seuil est un ajutage latéral (4) pratiqué sur l'enveloppe de la zone tampon et situé à une distance de l'orifice inférieur (10) déterminée en fonction du volume utile souhaité pour la zone tampon.

6. Dispositif selon la revendication 3, **caractérisé en ce que** le moyen de réglage du débit entrant dans la zone tampon est réalisé par un pointeau (5) vissé dans un trou taraudé (50) percé sur la surface extérieure de la zone tampon et débouchant dans le conduit (120) prolongeant l'orifice (11) d'entrée de la zone tampon pour permettre au pointeau (5) d'obturer de façon totale ou partielle ce conduit (120), le pointeau (5) étant pourvu d'un joint d'étanchéité (52).

7. Dispositif selon l'une des revendications 1 à 6, **caractérisé en ce que** le moyen de raccordement et de fixation de la zone tampon à la canalisation est un tube fileté (12) sur sa surface extérieure destiné à coopérer avec un trou taraudé (20) correspondant présent sur la canalisation d'alimentation (2).

8. Dispositif selon la revendication 7, **caractérisé en ce que** le tube de fixation (12) de la zone tampon à la canalisation d'alimentation (2) est d'axe oblique par rapport à l'axe longitudinal de la zone tampon, formant ainsi un angle compris entre 0° et 90° avec l'axe longitudinal de la zone tampon.

9. Dispositif selon la revendication 7, **caractérisé en ce que** le tube de fixation (12) de la zone tampon à la canalisation d'alimentation (2) est disposé verticalement, la zone tampon étant alors fixée sous la canalisation d'alimentation (2).

10. Dispositif selon la revendication 7, **caractérisé en ce que** le tube de fixation (12) de la zone tampon à la canalisation (2) est disposé horizontalement, la zone tampon étant fixée sur une paroi latérale de la canalisation d'alimentation(2).

11. Dispositif selon l'une des revendications 1 à 10, **caractérisé en ce que** l'orifice inférieur (10) est prolongé par un alésage taraudé (100) pour permettre la fixation de la pipette (3) et l'alimentation de celle-ci en liquide.

12. Dispositif selon la revendication 11, **caractérisé en ce que** l'alésage taraudé (100) est d'axe vertical.

13. Dispositif selon la revendication 11, **caractérisé en ce que** l'alésage taraudé (100) est d'axe horizontal.

14. Dispositif selon la revendication 11, **caractérisé en ce que** l'alésage taraudé (100) est d'axe oblique par rapport à l'axe longitudinal de la zone tampon, les deux axes formant un angle α compris entre 0° et 90 °

15. Dispositif selon la revendication 14, **caractérisé en ce que** le dispositif est **caractérisé en ce que** l'angle α a une valeur de 45 degrés.

16. Kit d'adaptation aux dispositifs d'abreuvement existants, **caractérisé en ce que** le kit est constitué d'un réservoir (1) pourvu à une extrémité d'un adaptateur destiné à se fixer dans la canalisation d'alimentation et à l'autre extrémité d'un orifice (10) destiné à recevoir la pipette d'abreuvement (3), l'extrémité proche de l'orifice de fixation (11) à la canalisation (2) comportant un moyen de réglage fin du débit d'alimentation goutte à goutte du réservoir (1) pour adapter le débit à la quantité journalière à distribuer, le volume du réservoir (1) étant supérieur à la quantité à délivrer à l'animal en une prise ponctuelle, le réservoir étant pourvu d'un moyen de maintenir le niveau du liquide en dessous d'un certain seuil quel que soit le débit réglé.
